# EUROPEAN PATENT SPECIFICATION

(11) **EP 2 557 849 B1**
(45) Date of publication and mention of the grant of the patent: **15.01.2014**
(21) Application number: 11360035.7
(22) Date of filing: 10.08.2011
(51) Int. Cl.: H04W 36/18

(54) **Soft handover**
Sanfte Verbindungsübergabe
Transfert sans coupure

(43) Date of publication of application: 13.02.2013
(73) Proprietor: Alcatel Lucent, 75007 Paris (FR)
(72) Inventor: Wong, Shin Horng, Chippenham Wiltshire, SN14 0SP (GB); Baker, Matthew P J, Canterbury Kent, CT2 9DB (GB)
(74) Representative: Sarup, David Alexander

(56) References cited:
- EP-A1- 1 445 878
- WO-A1-02/058280
- WO-A1-2008/085952
- US-A- 5 828 659
- US-A1- 2003 108 027
- US-A1- 2010 323 711

## Description

### FIELD OF THE INVENTION

The present invention relates to a user equipment and a method to establish radio links with a plurality of network nodes in a wireless communications network, a network node and a computer program product.

### BACKGROUND

Wireless communication networks are known. In a cellular system, radio coverage is provided to user equipment, for example, mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information and data from a base station and transmits information and data to a base station.

Information and data transmitted by a base station to user equipment occurs on channels of radio carriers known as downlink carriers. Information and data transmitted by user equipment to a base station occurs on uplink channels of radio carriers known as uplink carriers.

In wireless telecommunications networks, user equipment can move between geographical base station coverage areas. Services provided to user equipment are typically overseen by a radio network controller (RNC). The RNC communicates with user equipment and base stations and determines which base station each user equipment may be primarily connected to. Furthermore, the RNC acts to control and communicate with a base station and user equipment when user equipment moves from a geographical area served by one base station to a geographical area served by another base station, or between geographical areas served by the same base station.

In some cellular systems, for example, in a UMTS system, functionality known as "soft handover" (SHO) can be implemented. That functionality allows data traffic transmitted by user equipment or other mobile terminals using uplink channels to be received and decoded by multiple base stations. Those base stations may also be known in a UMTS system as "node Bs". Furthermore, if utilizing soft handover techniques, a user equipment may receive and combine data and control signals from multiple base stations in the downlink. That is to say, the user equipment can receive or listen to transmissions from multiple base stations and multiple base stations may listen to transmissions made by user equipment. This has several advantages including that transmissions made by user equipment are not seen as interference by adjacent cells. In order that such soft handover techniques can be implemented, it is necessary for user equipment and the relevant nodeBs to known that they are allowed and expecting to communicate with one another. User equipment is typically informed by the network of those nodeBs by which its transmissions can be heard and to which it may listen. That list of base stations is referred to as the "active set" of that user equipment.

Typically, if implementing a soft handover regime, a radio link is first set up between user equipment and a single base station. If it is determined that entry to a soft handover regime is desirable and possible, necessary information about the configuration of existing uplink transmissions from the user equipment to the single base station, including for example, scrambling code being used, can be passed from a first base station via a radio network controller (RNC) to a second base station to be added to the active set of the user equipment. That information passed to a second base station enables the second base station to synchronize its operation to the user equipment's uplink transmissions. Once a second node B has obtained uplink synchronization, the second base station can set up a new downlink with the user equipment such that its transmission timing is likely to be successfully received at the user equipment close to the reception timing of the existing downlink between the first base station and the user equipment.

Use of soft handover techniques can lead to improved network performance, since by allowing more than one base station to communicate with user equipment it is possible to obtain a degree of selective combination gain through macro diversity and soft combinations leading to gain. Soft handover functionality also allows an opportunity to minimise interference caused between cells by user equipment operating at the edge of geographical coverage regions supported by adjacent base stations.

As the configuration and arrangement of network nodes such as base stations within a wireless communication network becomes increasingly complex, and functionality of user equipment is increased, unexpected situations can occur which can lead to decreased overall network performance.

WO 02/058280 describes a method for inter-frequency hard handover in a radio communication system. The method described comprises the steps of: (i) at a mobile station, blocking a first uplink carrier frequency used for communication, transmitting a direct sequence spread preamble signal through a second uplink carrier frequency for a short time and continuously performing the communication through the first uplink carrier frequency; and (ii) at a target base transceiver station, acquiring an uplink synchronisation of a mobile station based on the preamble before performing handover.

Document US 5 828 659 A describes synchronisation per mobile station for soft-handover. A communication link from a base station may be transmitted in compressed mode. The mobile station measures neighbouring base stations during the idle part of the frame in compressed mode and transmits the measurement reports to the Radio Network Controller, RNC. After the RNC has decided on handover to a new base station and on the use of macro-diversity, the mobile station's communication link with the old base station is maintained while complete synchronisation and new link with the new base station are established during the idle part of the frame, wherein the RNC provides the new base station with the time offset to be used for the traffic channel on the new link. By keeping the old link after the new link is synchronised, communication to both base stations simultaneously can be employed. This scheme can be used for both up-and down-links.

Accordingly, it is desired to provide an improved technique for facilitating use of soft handover techniques.

### SUMMARY

According to a first aspect, there is provided user equipment operable to establish a radio link with a plurality of wireless network access nodes in a wireless communication network, comprising: first network access node communication logic configured to establish a direct communication link with a first network access node, that link being characterised by a set of first radio link communication characteristics; second network access node communication logic configured to establish a direct communication link with a second network access node; radio link transmission logic configured to directly provide said second network access node with said set of first radio link communication characteristics; such that transmissions made by said user equipment to said first network access node can be decoded by said second network access node; gap negotiation logic configured to negotiate a predetermined gap in said direct communication link with said first network access node; and wherein said second network access node communication logic is configured to establish said direct communication link with said second network access node during said predetermined gap in said direct communication link with said first network access node.

The introduction of smartphones has led to a change in the profile of data traffic handled by networks. It will be appreciated that data traffic may be particularly bursty in nature; for example, demand may be high whilst user equipment loads a website page, but then substantially zero whilst a user reads that website. Operation in a full cell_DCH state for such bursty traffic can be particularly wasteful of battery and, thus, the ability to handle bursty traffic without entering a more dedicated state has been recognised to be beneficial.

The soft handover techniques described previously have been determined to be particularly suitable for use when user equipment is operating in a cell_DCH state. As described, in such a state data transmissions are typically likely to last for a significant length of time and, thus, setting up the relationships necessary for soft handover via messaging through an RNC has been deemed to be worth the time taken since overall data traffic throughput can be significantly increased through a network.

As described above, the process of soft handover offers significant opportunity for a network to operate more efficiently.

User equipment may operate in various modes in, for example, a UMTS telecommunications network. On initial turning on of user equipment in a cell, it will typically operate in "idle mode". Once it synchronizes and attaches itself to a base station it gains radio resource control (RRC) connection and is referred to as being in a connected mode. User equipment in idle mode does not have a radio resource control connection. If user equipment is RRC connected it can be in one of five different RRC states: cell_DCH, cell_FACH, enhanced cell_FACH, cell_PCH or URA_PCH states.

User equipment typically moves into cell_DCH state when its traffic is high, since in such a state the user equipment is allocated a dedicated channel on which to transmit and receive data from a base station. In UMTS network architecture, user equipment can be in cell_DCH state when it is expected to have a high volume of traffic. Operation in a cell_DCH state is typically highly demanding of battery power.

Historically, user equipment operated, when not in cell_DCH state, using a random access channel (RACH) on the uplink and a base station will operate to communicate with user equipment using a forward access channel (FACH). RACH and FACH had a very small data carrying ability and in WCDMA or UMTS systems a capability for user equipment and base stations to operate and communicate data traffic therebetween using a shared or common resource on downlink and uplink when user equipment is in a cell_FACH state has been introduced.

In the uplink, the data traffic transmission occurs using an enhanced dedicated channel, and in the downlink it is sent on a high speed downlink shared channel. Such channels allow user equipment and base stations to communicate and to transmit longer and larger data packets between themselves for a time without the need for user equipment to enter a cell_DCH state. Such arrangements allow user equipment to remain in a cell_FACH state longer without transitioning to more dedicated RRC states, such as cell_DCH, thereby allowing a power consumption saving.

However, when operating in a cell_FACH state, data transmissions to and from user equipment are typically characterised by short bursts. As such, the relatively long delay incurred by passing information from user equipment and base stations via an RNC to set up soft handover by traditional methods would typically be too long for soft handover to be set up and used before a data burst occurring in a cell_FACH state ends. As a result, soft handover is not usually supported whilst user equipment operates in a cell_FACH state.

The lack of support for soft handover for user equipment operating in cell_FACH can result in worse system performance than user equipment and base stations achieve when user equipment is operating in a cell_DCH state. This is because there is no selection combining through macro diversity when operating in cell_FACH, leading to higher uplink transmission power requirements. Furthermore, if operating in a cell_FACH state, power control commands are only received from one base station at the user equipment. User equipment near the edge of a coverage area supported by a serving cell can therefore cause significant interference to neighbouring cells which are unable to request the user equipment reduces its power transmission and, even if they could, it would not be appropriate to do so unless the neighbour cells were also helping to receive an uplink signal, since any reduction in power instructed by an adjacent cell could reduce the effective data rate being achieved by user equipment in its serving cell.

The first aspect recognises that it is possible to enable and implement soft handover functionality quickly, thereby enabling the use of soft handover in cell_FACH, for example, as well as cell_DCH user equipment states. The first aspect allows a significantly reduced delay compared to conventional mechanisms for initiating soft handover and transferring information necessary to achieve soft handover between base stations via an RNC.

The first aspect recognises that by directly communicating radio communication characteristics to a second access point about communications which may occur with a first access point, ensures both first and second access points may be capable of understanding transmissions made by user equipment. It will be appreciated that it is possible to implement the first aspect such that a second wireless access point establishes a full communication link with said user equipment, the radio communication characteristics of that link being passed back to the first base station when said user equipment communicates with the first access network node.

In some embodiments, the sharing of radio communication characteristics to a second access point allows that second access point to establish a link with user equipment and communicate information regarding control channels transmitted by said second wireless access node, thus allowing those instructions to be understood by user equipment.

In some embodiments, the first aspect may be triggered by user equipment on entry to an overlap region between areas of radio coverage provided by the first and second wireless access nodes. The user equipment may trigger the first aspect on detection that signals being received, for example, from broadcast channels, from each of the first and second access nodes meet predetermined trigger criteria.

Wireless network access nodes may take the form of base stations, small cell base stations and LTE base stations having various degrees of RNC functionality in-built, but typically offer direct communication links with user equipment in a communication network.

The user equipment comprises: gap negotiation logic configured to negotiate a predetermined gap in the direct communication link with the first network access node. Accordingly, user equipment may be operable to cease communication with the first network access node whilst a direct communication link is established with a second network access node.

In one embodiment, the gap negotiation logic is configured to request a gap having a predetermined period. In one embodiment, the predetermined gap has a predetermined period determined by the first network access node. In one embodiment, commencement of the gap may be requested by user equipment. In one embodiment, commencement of the gap may be instructed by the first network node. Accordingly, it will be appreciated that it may be user equipment or an access node which determines the period of the allowed gap, or time period of cessation of communication with the first network node to establish communication with the second network node. That period may be predetermined to be a fixed period, or may be configurable based upon, for example, relative signal strengths at said user equipment from said first and second network nodes. The user equipment may request a particular length and timing of the gap, for example, taking into account a maximum number of RACH preambles allowed by a second access node. Alternatively, the first network node may assign gap length and timing.

The second network access node communication logic is configured to establish the direct communication link with said second network access node during said predetermined gap in said direct communication link with said first network access node. Accordingly, although user equipment already has a radio link with a first network node, it can effectively "pause" that radio link to establish a radio link with a second network node. In embodiments, it will be appreciated that conventions such as PRACH preambles may be used by user equipment to establish the radio link with the second network node, which would be unnecessary using conventional mechanisms to establish softer handover, since necessary timing information and radio link characteristics of the radio link between user equipment and the first network node can be determined indirectly by a second base station by communication with the core network. Direct communication can reduce the total time taken to share information between the first and second network nodes compared to indirect communication via an RNC.

In one embodiment, the first network access node communication logic is configured to resume direct communication with the first network access node after expiry of the predetermined negotiated gap. Accordingly, the second network node configures its operation to coordinate with the radio link pre-established with the first network node.

Directly providing the second network access node with the set of first radio link communication characteristics prevents a requirement to obtain the set of first radio link communication characteristics from the wireless communication network. Accordingly, embodiments provide implementations of a soft handover transmission regime in which there is no need to utilise layer 3 messaging, and soft handover may be established using primarily layer 1 and 2 messages. In one embodiment, provision of the second network access node with the set of first radio link communication characteristics occurs via layer 1 messaging.

In one embodiment, the first radio link communication characteristics comprise radio link demodulation information. The radio link demodulation information may comprise at least one of: scrambling code information; timing information or radio channel information. Accordingly, a second network node may be operable to decode transmissions made by the user equipment to the first network node, co-ordinate transmissions to the user equipment with those made by the first network node and otherwise ensure smooth operation of a soft handover regime.

In one embodiment, the user equipment performs the method of the first aspect whilst operating in Cell_FACH mode. Accordingly, it will be appreciated that the method of the first aspect may be particularly advantageous to bursty data traffic profiles used by smartphones operating in Cell_FACH. The first aspect allows the gains in cell capacity and efficient data transfer within a network to be available to user equipment operating in a cell_FACH state by offering fast soft handover setup.

It will be appreciated that a further aspect provides a wireless access network node operable to receive a direct message from user equipment, that message offering an indication of first radio link communication characteristics, such that transmissions made by said user equipment to a first network access node can be decoded by the second network access mode. Analogous features may be provided in that aspect to those features provided by the first aspect, it being understood that the user equipment and network access nodes operate according to a transmitter-receiver relationship.

A second aspect provides a method for a user equipment to establish a radio link with a plurality of wireless network access nodes in a wireless communication network, comprising: establishing a direct communication link with a first network access node, that link being characterised by a set of first radio link communication characteristics; establishing a direct communication link with a second network access node and directly providing the second network access node with the set of first radio link communication characteristics; such that transmissions made to the first network access node can be decoded by the second network access node;
negotiating a predetermined gap in said direct communication link with said first network access node; and establishing said direct communication link with said second network access node during said predetermined gap in said direct communication link with said first network access node.

In one embodiment, the predetermined gap has a predetermined period determined by the first network access node.

In one embodiment, the method comprises: resuming direct communication with the first network access node after expiry of the predetermined negotiated gap.

In one embodiment, the first radio link communication characteristics comprise radio link demodulation information.

In one embodiment, the radio link demodulation information comprises at least one of: scrambling code information; timing information or radio channel information.

In one embodiment, the provision of the second network access node with the set of first radio link communication characteristics occurs via layer 1 messaging.

A third aspect provides a computer program product comprising computer program code means configured to perform the steps of the method of the second aspect, when executed on a computer.

Further particular and preferred aspects are set out in the accompanying independent and dependent claims. Features of the dependent claims may be combinedwith features of the independent claims, as appropriate, without departing from the scope of the invention as set out in the claims.

### BRIEF DESCRIPTION OF THE DRAWINGS

Embodiments of the present invention will now be described further with reference to the accompanying drawings, in which:
Figure 1 illustrates the main components of a wireless telecommunications network according to one embodiment; and
Figure 2 illustrates schematically an example of implementing soft handover according to one embodiment.

### DESCRIPTION OF THE EMBODIMENTS

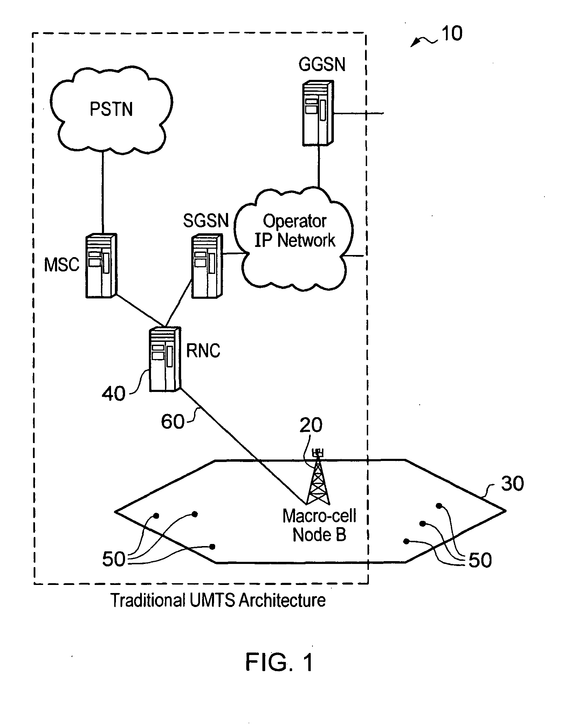

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station and, thus, effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

In some cellular systems, for example, in a UMTS system, functionality known as "soft handover" (SHO) can be implemented. According to such a system, data traffic transmitted by user equipment or other mobile terminals using uplink channels can be received at multiple base stations. Those base stations may also be known in UMTS as "node Bs". Furthermore, if utilizing soft handover techniques, a user equipment may receive and combine data from multiple base stations in the downlink. That is to say, the user equipment can receive or listen to transmissions from multiple base stations and multiple base stations may listen to transmissions made by user equipment. This has several advantages including that transmissions made by user equipment are not seen as interference by adjacent cells. In order that such soft handover techniques can be implemented, it is necessary for user equipment and the relevant node Bs to known that they are allowed to communicate with one another. The user equipment is informed of those node Bs by which its transmissions can be heard and to which it may listen. That list of base stations is considered to be in the "active set" of that user equipment.

Typically, if implementing a soft handover regime, a radio link is first set up between user equipment and a single base station. If it is determined that entry to a soft handover regime is desirable, necessary information about the configuration of existing uplink transmissions from the user equipment to the single base station, including for example scrambling code being used, can be passed from a first base station via a radio network controller (RNC) to a second node B that is to be added to the active set of the user equipment. That information passed to a second node B enables the second node B to synchronize its operation to the user equipment's uplink transmissions. Once a second node B has obtained uplink synchronization, the second node B can set up a new downlink with the user equipment such that its transmission timing is designed to be received at the user equipment close to the reception timing of the existing downlink between the first base station and the user equipment.

Use of soft handover techniques can lead to improved network performance, since by allowing more than one base station to communicate with user equipment it is possible to obtain a degree of selective combination gain through macro diversity, soft combinations also leading to gain and to minimise interference caused between cells by user equipment operating at the edge of geographical coverage regions supported by base stations.

As described above, the process of soft handover offers significant opportunity for a network to operate more efficiently.

User equipment may operate in various modes in, for example, a UMTS telecommunications network. On initial turning on of user equipment in a cell, it will typically operate in "idle mode". Once it synchronizes and attaches itself to a base station it gains radio resource control (RRC) connection and is referred to as being in a connected mode. User equipment in idle mode does not have a radio resource control connection. If user equipment is RRC connected it can be in one of five different RRC states: cell_DCH, cell_FACH, enhanced cell_FACH, cell_PCH or URA_PCH states.

User equipment typically moves into cell_DCH state when its traffic is high, since in such a state the user equipment is allocated a dedicated channel on which to transmit and receive data from a base station. In UMTS network architecture, user equipment can be in cell_DCH state when it is expected to have a high volume of traffic. Operation in a cell_DCH state is typically highly demanding of battery power.

Historically, user equipment operated, when not in cell_DCH state, using a random access channel (RACH) on the uplink and a base station will operate to communicate with user equipment using a forward access channel (FACH). RACH and FACH had a very small data carrying ability and in WCDMA or UMTS systems a capability for user equipment and base stations to operate and communicate data traffic therebetween using a shared or common resource on downlink and uplink when user equipment is in a cell_FACH state has been introduced. In the uplink, the data traffic transmission occurs using an enhanced dedicated channel, and in the downlink it is sent on a high speed downlink shared channel. Such channels allow user equipment and base stations to communicate and to transmit longer and larger data packets between themselves for a time without the need for user equipment to enter a cell_DCH state. Such arrangements allow user equipment to remain in a cell_FACH state longer without transitioning to more dedicated RRC states, thereby allowing a power consumption saving.

It will be appreciated that data traffic may be particularly bursty in nature; for example, demand may be high whilst user equipment loads a website page, but then substantially zero whilst a user reads that website. Operation in a full cell_DCH state for such bursty traffic can be particularly wasteful of battery and, thus, the ability to handle bursty traffic without entering a more dedicated state is beneficial.

The soft handover techniques described previously have been determined to be particularly suitable for use when user equipment is operating in a cell_DCH state. As described, in such a state data transmissions are typically likely to last for a significant length of time and, thus, setting up the relationships necessary for soft handover via messaging through an RNC has been deemed to be worth the time taken since overall data traffic throughput can be significantly increased through a network.

However, when operating in a cell_FACH state, data transmissions to... from user equipment are typically characterised by short bursts. As such, the relatively long delay incurred by passing information from user equipment and base stations via an RNC to set up soft handover would typically be too long for soft handover to be set up and used before a data burst occurring in a cell_FACH state ends. As a result, soft handover is not usually supported whilst user equipment operates in a cell_FACH state.

The lack of support for soft handover for user equipment operating in cell_FACH can result in worse system performance than user equipment and base stations achieve when user equipment is operating in a cell_DCH state. This is because there is no selection combining through macro diversity when operating in cell_FACH, leading to higher uplink transmission power requirements. Furthermore, if operating in a cell_FACH state, power control commands are only received from one base station at the user equipment. User equipment near the edge of a coverage area supported by a serving cell can therefore cause significant interference to neighbouring cells which are unable to request the user equipment reduces its power transmission and, even if they could, it would not be appropriate to do so unless the neighbour cells were also helping to receive an uplink signal, since any reduction in power instructed by an adjacent cell could reduce the effective data rate being achieved by user equipment in its serving cell.

Embodiments recognise that it is possible to enable soft handover quickly, thereby enabling the use of soft handover in cell_FACH as well as cell_DCH user equipment states. The first aspect allows significantly reduced delay compared to conventional cell_DCH mechanisms of transferring information regarding soft handover via an RNC.

According to embodiments, user equipment which has a radio link established with at least a first base station is operable to establish a radio link with a second base station and does so by transferring necessary radio link configuration information by radio communication directly with the second base station. This contrasts with a traditional approach in which radio link configuration information is transferred by network signalling from base station to base station typically via an RNC.

In embodiments, the user equipment and first base station communicate to negotiate there between a gap in at least uplink communication. Such a gap allows user equipment to operate such that configuration signalling can be exchanged with a second base station. In negotiating a gap the use equipment may request a particular length and timing of gap, for example, taking into account a maximum number of RACH preamble transmissions allowed by a second node B, or a first base station may be operable in that negotiation to assign a gap of a particular length and timing.

During such a negotiated gap user equipment may be operable in some embodiments to send a physical random access channel (PRACH) preamble to the second base station. Conventionally it will be understood that user equipment does not send any PRACH preambles when a radio link with any base station is already in existence since the necessary timing information can be acquired by a new base station after receipt of uplink configuration information via an RNC. The step of sending physical random access channel preambles is, in embodiments typically the same as when user equipment first sets up a radio link with a node with a base station highly when user equipment is in an idle mode and connects to any available base station that is to say the preamble procedure is analogous to that in which user equipment operates when no prior configuration information is available regarding user equipment at a base station.

Once the user equipment has some transmission resources assigned by the second base station to which it is attempting to connect in order to use a soft handover technique, the user equipment is operable to communicate the configuration parameters of the existing uplink with the first base station to the second base station.

After the user equipment has communicated the configuration parameters of the existing uplink to the second base station the user equipment is operable to resume communication with the first base station after the negotiated gap. The second base station is then operable to synchronise with the existing uplink.

In an alternative embodiment rather than the user equipment being operable to transmit configuration parameters of the existing uplink with the first base station to the second base station, the user equipment is operable to instead, after being assigned transmissions resources by the second base station, negotiate a gap with the second base station. During that negotiated gap with the second base station the user equipment is operable to resume communication with the first base station and inform the first base station of the configuration parameters of the new radio link which has been established with the second base station. The user equipment is then operable to resume communication with the second base station and the first base station synchronises its new uplink to the uplink occurring with the second base station.

Two particular implementations of embodiments are now described in more detail. In a first exemplary embodiment uplink transmissions take place using common enhanced dedicated channel resources (E-DCH resources). Those enhanced dedicated channels are available from a common pool available to all user equipment. In this particular embodiment, user equipment is operable to select a PRACH preamble at random from a group of preambles assigned for common E-DCH resource request. Each preamble corresponds to one E-DCH resource configuration the parameters of which, including uplink scrambling code, are broadcast in a system information message broadcast by a base station.

If the EDCH resource corresponding to the selected preamble is available, a first base station confirms the resource assignment to the user equipment that transmitted the preamble by means of an acknowledgement when an acquisition indicator channel (AICH). If the requested resource is not available, the base station either declines the request or assigns a different resource using an extended acquisition indicator channel (E-AICH).

The user equipment operating in cell FACH has one such resource assigned by the first base station and negotiates a gap as described previously in E-DCH transmissions assigned thereto. The transmission resources assigned by a second base station in accordance with a method described above are also E-DCH resources selected from a set of E-DCH configurations broadcast in the second cell. The configuration parameters communicated between base stations in this embodiment comprise a set of parameters of the assigned EDCH resource as broadcast in the respective cells system information, including the uplink scrambling code.

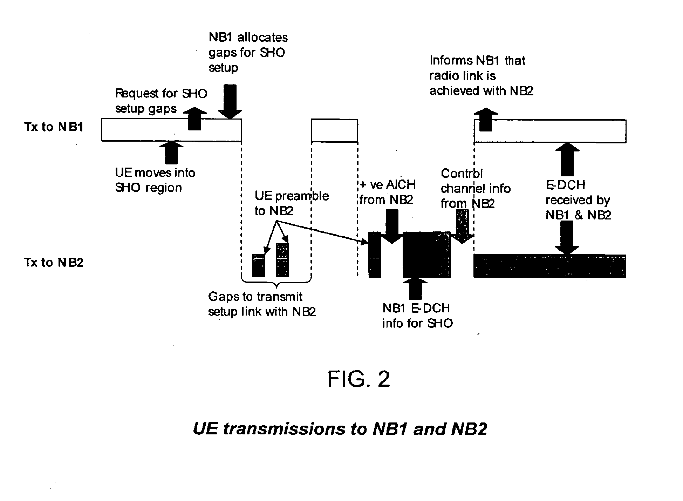

Figure 2 illustrates schematically a method of implementing soft handover in accordance with an embodiment. In this example, user equipment 50 is operating such that it already has common resource from a first base station NB1. It then moves into an overlapping coverage region between two base stations NB1 and NB2. As part of its usual measurement procedures, the user equipment is operable to realise that it is an overlapping region and would benefit from use of soft handover.

Figure 2 illustrates schematically transmission from user equipment 50 to base stations NB1 and NB2 in order to implement soft handover operation. When user equipment 50 detects that it is in a soft handover region it is operable to send a request to the first base station NB1 to ask for a gap in its transmission regime such that it can set up an effective radio link with the second base station.

The first base station is operable to allocate a gap pattern to the requesting user equipment. In that gap the user equipment transmits radio communication "preambles" to the second base station NB2. In the illustrated example, the user equipment manages to send two preambles to the second base station NB2 and not receive an AICH. As the pre-negotiated gap with NB1 ends and no communication has been effectively set up with the second base station, NB2, the user equipment moves back to full communication with the first base station NB1 and continues its transmissions as before.

The user equipment in the embodiment shown negotiates a second gap in transmissions to the first base station. In that second gap, the user equipment transmits a third preamble to the second base station NB2 and this time receives a positive AICH from that base station. Once it has received an AICH message the user equipment is operable to transmit radio communication demodulation information regarding the E-DCH resource currently being used with the first base station NB1 to the second base station NB2. It should be noted that the demodulation information message sent from user equipment to a second base station may be a new message type to be decoded at a base station. The second base station NB2 will typically be operable, on establishment of some communication with the user equipment, to send its control channel (for example an E-HICH and E-RGCH) details to the user equipment, thus allowing the user equipment to understand control channel messages sent by NB2. Once the user equipment is operable, at the end of the gap, to resume communications with the first base station NB1 the user equipment informs the first base station of the existence of a new radio link with the second base station. At this point the second base station is operable to try to synchronise its operation with the user equipment uplink transmissions to the first base station whilst the user equipment listens to E-HICH and E-RGCH channels received from the second base station in addition to those received from the first base station.

Once synchronisation is achieved by the second base station, the user equipment transmissions can be decoded by both the first base station and the second base station thereby achieving the benefits associated with soft handover.

The second base station NB2 informs the RNC of a new soft handover link with user equipment 50 once it has received the first base station's E-DCH demodulation information from the user equipment.

The gap pattern granted by the first base station can be selected to be sufficiently large/long to allow the user equipment to transmit preambles and exchange set up messages with a second base station.

Embodiments allow fast soft handover to be established which makes it possible to execute soft handover even for bursty data transmissions when user equipment is operating in a cell_FACH state. As a result, system performance gains are achieved due to the availability of selection combining and interference reduction. It will be appreciated that a similar method may be used in various other radio connected modes, including Cell_DCH mode, since the method described allows fast set up of soft handover without the need to route setup messages through a core network prior to commencement of soft handover.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof, without departing from the scope of the invention as defined in the appended claims.

## Claims

1. User equipment (50) operable to establish a radio link with a plurality of wireless network access nodes (20) in a wireless communication network (10), comprising:
first network access node communication logic configured to establish a direct communication link with a first network access node (NB1), that link being **characterised by** a set of first radio link communication characteristics;
second network access node communication logic configured to establish a direct
communication link with a second network access node (NB2);
radio link transmission logic configured to directly provide said second network access node (NB2) with said set of first radio link communication characteristics; such that transmissions made by said user equipment to said first network access node (NB1) can be decoded by said second network access node;
gap negotiation logic configured to negotiate a predetermined gap in said direct communication link with said first network access node (NB1); and wherein said second network access node communication logic is configured to establish said direct communication link with said second network access node (NB2) during said predetermined gap in said direct communication link with said first network access node (NB1).

2. User equipment according to claim 1, wherein said gap negotiation logic is configured to request a gap having a predetermined period.

3. User equipment according to claim 1, wherein said predetermined gap has a predetermined period determined by said first network access node.

4. User equipment according to any one of claims 1 to 3, wherein
said first network access node communication logic is configured to resume direct communication with said first network access node (NB 1) after expiry of said predetermined negotiated gap.

5. User equipment according to any preceding claim, wherein said first radio link communication characteristics comprise radio link demodulation information.

6. User equipment according to claim 5, wherein said radio link demodulation information comprises at least one of: scrambling code information; timing information or radio channel information.

7. User equipment according to any preceding claim, wherein said provision to said second network access node (NB2) with said set of first radio link communication characteristics occurs via layer 1 messaging.

8. User equipment according to any preceding claim, operating in Cell_FACH mode.

9. A method for a user equipment to establish a radio link with a plurality of wireless network access nodes (20) in a wireless communication network, comprising:
establishing a direct communication link with a first network access node (NB1), that link being **characterised by** a set of first radio link communication characteristics;
establishing a direct communication link with a second network access node (NB2) and
directly providing said second network access node (NB2) with said set of first radio link communication characteristics; such that transmissions made to the first network access
node (NB1) can be decoded by said second network access node (NB2);
negotiating a predetermined gap in said direct communication link with said first network access node (NB1); and establishing said direct communication link with said second network access node (NB2) during said predetermined gap in said direct communication link with said first network access node (NB1).

10. A computer program product comprising computer program code means configured to perform the steps of the method of claim 9, when executed on a computer.

## Patentansprüche

1. Benutzerendgerät (50), betreibbar für den Aufbau einer Funkverbindung mit einer Vielzahl von drahtlosen Netzwerkzugangsknoten (20) in einem drahtlosen Kommunikationsnetzwerk (10), umfassend:
Erste Netzwerkzugangsknoten-Kommunikationslogik, konfiguriert für den Aufbau einer direkten Kommunikationsverbindung mit einem ersten Netzwerkzugangsknoten (NB1),
wobei diese Verbindung durch einen Satz von ersten Funkverbindungskommunikationseigenschaften gekennzeichnet ist;
zweite Netzwerkzugangsknoten-Kommunikationslogik, konfiguriert für den Aufbau einer direkten Kommunikationsverbindung mit einem zweiten Netzwerkzugangsknoten (NB2), Funkverbindungsübertragungslogik, konfiguriert für die direkte Bereitstellung des besagten Satzes von ersten Funkverbindungskommunikationseigenschaften an den besagten zweiten Netzwerkzugangsknoten (NB2), so dass von dem besagten Benutzerendgerät an den besagten ersten Netzwerkzugangsknoten (NB1) durchgeführte Übertragungen von dem besagten zweiten Netzwerkzugangsknoten decodiert werden können;
Lückenverhandlungslogik, konfiguriert für das Aushandeln einer vorbestimmten Lücke in der besagten direkten Kommunikationsverbindung mit dem besagten ersten Netzwerkzugangsknoten (NB1); und wobei die besagte zweite Netzwerkzugangsknoten-Kommunikationslogik für den Aufbau der besagten direkten Kommunikationsverbindung mit dem besagten zweiten Netzwerkzugangsknoten (NB2) während der besagten vorbestimmten Lücke in der besagten direkten Kommunikationsverbindung mit dem besagten ersten Netzwerkzugangsknoten (NB1) konfiguriert ist.

2. Benutzerendgerät nach Anspruch 1, wobei die besagte Lückenverhandlungslogik für das Anfordern einer Lücke mit einer vorbestimmten Dauer konfiguriert ist.

3. Benutzerendgerat nach Anspruch 1, wobei die besagte vorbestimmte Lücke eine von dem besagten ersten Netzwerkzugangsknoten vorbestimmte Dauer hat.

4. Benutzerendgerät nach einem beliebigen der Ansprüche 1 bis 3, wobei die besagte erste Netzwerkzugangsknoten-Kommunikationslogik für die Wiederaufnahme der direkten Kommunikation mit dem besagten ersten Netzwerkzugangsknoten (NB1) nach Ablauf der besagten vorbestimmten ausgehandelten Lücke konfiguriert ist.

5. Benutzerendgerät nach einem beliebigen der vorstehenden Ansprüche, wobei die besagten ersten Funkverbindungskommunikationseigenschaften Funkverbindungsdemodulationsinformationen umfassen.

6. Benutzerendgerät nach Anspruch 5, wobei die besagten Funkverbindungsdemodulationsinformationen zumindest eine der folgenden Informationen umfassen: Verwürfelungscodeinformationen, Zeitplanungsinformationen oder Funkkanalinformationen.

7. Benutzerendgerät nach einem beliebigen der vorstehenden Ansprüche, wobei die besagte Bereitstellung des besagten Satzes von ersten Funkverbindungskommunikationseigenschaften an den besagten zweiten Netzwerkzugangsknoten (NB2) über Schicht-1-Messaging erfolgt.

8. Benutzerendgerät nach einem beliebigen der vorstehenden Ansprüche, betrieben im Cell_FACH-Modus.

9. Verfahren für ein Benutzerendgerät zum Aufbau einer Funkverbindung mit einer Vielzahl von drahtlosen Netzwerkzugangsknoten (20) in einem drahtlosen Kommunikationsnetzwerk, umfassend:
Aufbauen einer direkten Kommunikationsverbindung mit einem ersten Netzwerkzugangsknoten (NB1), wobei diese Verbindung durch einen Satz von ersten Funkverbindungskommunikationseigenschaften gekennzeichnet ist;
Aufbauen einer direkten Kommunikationsverbindung mit einem zweiten Netzwerkzugangsknoten (NB2), und direktes Bereitstellen des besagten Satzes von ersten Funkverbindungskommunikationseigenschaften an den besagten zweiten Netzwerkzugangsknoten (NB2), so dass an den besagten ersten Netzwerkzugangsknoten (NB1) durchgeführte Übertragungen von dem besagten zweiten Netzwerkzugangsknoten (NB2) decodiert werden können;
Aushandeln einer vorbestimmten Lücke in der besagten direkten Kommunikationsverbindung mit dem besagten ersten Netzwerkzugangsknoten (NB1);
und Aufbauen der besagten direkten Kommunikationsverbindung mit dem besagten zweiten Netzwerkzugangsknoten (NB2) während der besagten vorbestimmten Lücke in der besagten direkten Kommunikationsverbindung mit dem besagten ersten Netzwerkzugangsknoten (NB1).

10. Computerprogramm-Produkt mit Computerprogrammcodemitteln, konfiguriert für die Durchführung der Schritte des Verfahrens gemäß Anspruch 9, wenn es auf einem Computer ausgeführt wird.

## Revendications

1. Équipement d'utilisateur (50) pouvant être utilisé pour établir une liaison radioélectrique avec une pluralité de noeuds d'accès (20) de réseau sans fil dans un réseau de communication sans fil (10), comprenant :
une première logique de communication de noeud d'accès de réseau configurée pour établir une liaison de communication directe avec un premier noeud d'accès de réseau (NB1), cette liaison étant **caractérisée par** un ensemble de premières caractéristiques de communication de liaison radioélectrique ;
une deuxième logique de communication de noeud d'accès de réseau configurée pour établir une liaison de communication directe avec un deuxième noeud d'accès de réseau (NB2) ;
une logique d'émission de liaison radioélectrique configurée pour délivrer directement audit deuxième noeud d'accès de réseau (NB2) ledit ensemble de premières caractéristiques de communication de liaison radioélectrique ; de sorte que les émissions effectuées par ledit équipement d'utilisateur vers ledit premier noeud d'accès de réseau (NB1) peuvent être décodées par ledit deuxième noeud d'accès de réseau ;
une logique de négociation de pause configurée pour négocier une pause prédéterminée dans ladite liaison de communication directe avec ledit premier noeud d'accès de réseau (NB1) ; et avec lequel ladite deuxième logique de communication de noeud d'accès de réseau est configurée pour établir ladite liaison de communication directe avec ledit deuxième noeud d'accès de réseau (NB2) pendant ladite pause prédéterminée dans ladite liaison de communication directe avec ledit premier noeud d'accès de réseau (NB1).

2. Équipement d'utilisateur selon la revendication 1, avec lequel ladite logique de négociation de pause est configurée pour demander une pause qui présente une période prédéterminée.

3. Équipement d'utilisateur selon la revendication 1, avec lequel ladite pause prédéterminée présente une période prédéterminée déterminée par ledit premier noeud d'accès de réseau.

4. Équipement d'utilisateur selon l'une quelconque des revendications 1 à 3, avec lequel ladite première logique de communication de noeud d'accès de réseau est configurée pour poursuivre la communication directe avec ledit premier noeud d'accès de réseau (NB1) après l'expiration de ladite pause négociée prédéterminée.

5. Équipement d'utilisateur selon l'une quelconque des revendications précédentes, avec lequel lesdites premières caractéristiques de communication de liaison radioélectrique comprennent des informations de démodulation de liaison radioélectrique.

6. Équipement d'utilisateur selon la revendication 5, avec lequel lesdites informations de démodulation de liaison radioélectrique comprennent au moins une information de code de brouillage, une information de synchronisation ou une information de canal radioélectrique.

7. Équipement d'utilisateur selon l'une quelconque des revendications précédentes, avec lequel ladite délivrance audit deuxième noeud d'accès de réseau (NB2) dudit ensemble de premières caractéristiques de communication de liaison radioélectrique a lieu par le biais d'une messagerie de couche 1.

8. Équipement d'utilisateur selon l'une quelconque des revendications précédentes, fonctionnant en mode Cell_FACH.

9. Procédé pour un équipement d'utilisateur pour établir une liaison radioélectrique avec une pluralité de noeuds d'accès (20) de réseau sans fil dans un réseau de communication sans fil, comprenant :
établissement d'une liaison de communication directe avec un premier noeud d'accès de réseau (NB1), cette liaison étant **caractérisée par** un ensemble de premières caractéristiques de communication de liaison radioélectrique ;
établissement d'une liaison de communication directe avec un deuxième noeud d'accès de réseau (NB2) et délivrance directe audit deuxième noeud d'accès de réseau (NB2) dudit ensemble de premières caractéristiques de communication de liaison radioélectrique ; de sorte que les émissions effectuées vers ledit premier noeud d'accès de réseau (NB1) peuvent être décodées par ledit deuxième noeud d'accès de réseau (NB2) ;
négociation d'une pause prédéterminée dans ladite liaison de communication directe avec ledit premier noeud d'accès de réseau (NB1) ; et établissement de ladite liaison de communication directe avec ledit deuxième noeud d'accès de réseau (NB2) pendant ladite pause prédéterminée dans ladite liaison de communication directe avec ledit premier noeud d'accès de réseau (NB1).

10. Produit de programme information comprenant des moyens de code de programme informatique configurés pour exécuter les étapes du procédé selon la revendication 9 lorsqu'il est exécuté sur un ordinateur.
